# EUROPÄISCHE PATENTSCHRIFT

(11) **EP 0 676 247 B1**
(45) Veröffentlichungstag und Bekanntmachung des Hinweises auf die Patenterteilung: **11.08.1999**
(21) Anmeldenummer: 95104269.6
(22) Anmeldetag: 23.03.1995
(51) Int. Cl.: B05C 11/10, B05C 5/02, F16K 31/00

(54) **Auftragskopf zur dosierten Abgabe von strömenden Medien**
Coating head for metered dispensing of fluid products
Tête d'application pour la distribution de doses de produit fluide

(30) Priorität: 02.04.1994 DE 4411569
(43) Veröffentlichungstag der Anmeldung: 11.10.1995
(73) Patentinhaber: ITW Industrie GmbH, 40822 Mettmann (DE)
(72) Erfinder: Würth, Heiko, D-61440 Oberursel (DE); Reuter, Martin, D-85221 Dachau (DE)
(74) Vertreter: Patentanwälte Ostriga & Sonnet

(56) Entgegenhaltungen:
- DE-C- 4 325 143
- US-A- 4 022 166
- US-A- 5 271 226
- DATABASE WPI Derwent Publications Ltd., London, GB; AN 83-D9958K XP002000336 & SU-A-928 089 (ANDREEV YU N) , 15.Mai 1982
- PATENT ABSTRACTS OF JAPAN vol. 016, no. 021 (M-1201), 20.Januar 1992 & JP-A-03 234981 (KOGANEI LTD), 18.Oktober 1991,
- PATENT ABSTRACTS OF JAPAN vol. 012, no. 091 (M-679), 24.März 1988 & JP-A-62 228664 (MIKUNI KOGYO CO LTD), 7.Oktober 1987,
- PATENT ABSTRACTS OF JAPAN vol. 94, no. 010 & JP-A-06 277597 (NIRECO CORP), 4.Oktober 1994,

## Beschreibung

Die Erfindung betrifft einen Auftragskopf zur dosierten Abgabe von strömenden Medien, insbesondere Schmelzkleber, Schmierstoffe, Farben od. dgl., mit einem Gehäuse, in dem ein Ventilantrieb und wenigstens eine Ventildüse angeordnet ist, mit mindestens zwei mit einer Spannungsquelle verbundenen, aus nebeneinander angeordneten Piezo-Stapeln bestehenden piezoelektrischen Element, wobei die Piezo-Stapel abwechselnd auf eine Wippe einwirken, an der ein Ventilglied angeordnet ist und daß am gelenkseitigen Endbereich der Wippe die Piezo-Stapeln jeweils im gleichen Abstand beidseitig einer senkrecht durch das Gelenk verlaufenden Achse angeordnet sind und abwechselnd auf die Wippe einwirken.

Ein derartiger Stand der Technik ist beispielsweise aus der SU-A-928089 und der JP-A-3 234 981 bekannt. Bei diesem Stand der Technik wirken jeweils zwei beidseitig einer Wippenachse angeordnete Piezo-Stapel abwechselnd so auf die Wippe ein, daß das Ventilglied bzw. der Wippenarm, insbesondere an seinem freien Endbereich, eine quer zur Bewegung der Piezo-Stapel verlaufende Schwenkbewegung vollzieht. Innerhalb des Schwenkbereiches des Ventilgliedes bzw. des Wippenarmes ist beidseitig jeweils eine Ventildüse angeordnet. Im Betrieb der Vorrichtung, d.h. bei abwechselnder Erregung der Piezo-Stapel, ist es mit Hilfe dieser Konstruktion möglich, immer abwechselnd eine Ventildüse zu schließen und eine zu öffnen.

Darüberhinaus ist ein druckschriftlich nicht belegbarer, offenkundig vorbenutzter Auftragskopf bekannt, der zum Auftragen von beispielsweise Heißkleber auf ein aus Karton, Papier, Textil Vlies und dergleichen bestehendes Substrat dient. Dabei wird das bahnenförmige Substrat an dem feststehenden Auftragskopf vorbeigeführt. Der Auftragskopf weist einen Ventilantrieb auf, der aus einem piezoelektrischen Element besteht, wobei das piezoelektrische Element direkt auf das Ventilglied einwirkt. Der piezoelektrisch angetriebene Auftragskopf hat den Vorteil, daß seine maximale Frequenz deutlich größer ist als der von elektro-magnetisch oder pneumatisch betätigten Auftragsköpfen. Darüberhinaus ist es mit diesem bekannten Stand der Technik möglich, wesentlich größere Ventilkräfte zu erzeugen. Letztlich baut ein piezoelektrisch angetriebener Auftragskopf wesentlich kleiner als elektrisch oder pneumatisch angetriebene Auftragsköpfe.

Nachteiligerweise ist jedoch der durch den piezoelektrischen Antrieb erzeugte Ventilhub sehr klein, da das piezoelektrische Element bei Anlegen einer Spannung nur einen maximalen Hub von ca. 1,4 bis 1,7 o/oo seiner Gesamtlänge aufweist.

Da sich piezoelektrische Elemente grundsätzlich bei der Erwärmung deutlich ausdehnen, besteht das piezoelektrische Element aus Gründen der Temperaturkompensation aus drei parallel nebeneinander angeordneten Piezo-Stapeln, die auf aufwendige Weise federnd gelagert sind, wobei ausschließlich der mittlere Piezo-Stapel der Ventilbetätigung dient. Diese Art der Temperaturkompensation verteuert die Herstellung des bekannten Auftragskopfes erheblich.

Darüber hinaus besteht bei dem bekannten Auftragskopf, insbesondere bei der Verwendung von Heißklebern, die Temperaturen zwischen 150 und 200° Celsius aufweisen, die Gefahr, daß das piezoelektrische Element über seine Temperaturgrenze von 100 bis 130° Celsius hinaus erwärmt und dadurch zerstört wird.

Ausgehend von dem zuerst abgehandelten Stand der Technik besteht die Aufgabe der Erfindung darin, einen zum Auftrag von insbesondere Heißklebern auf ein vorbeigeführtes Substrat geeigneten Auftragskopf zu schaffen, der einfach und kostengünstig herzustellen und der nicht nur im Niedrigtemperaturbereich, sondern auch im Hochtemperaturbereich einsetzbar ist.

Die Lösung dieser Aufgabe ergibt sich durch die Merkmale des Patentanspruchs 1, insbesondere durch die Merkmale des Kennzeichenteils des Patentanspruchs 1, wonach das piezoelektrische Element einschließlich schwenkbar gelagerter Wippe einer einzigen Ventildüse zugeordnet ist, und zur Betätigung des Ventilgliedes sowohl in Schließrichtung als auch in Öffnungsrichtung dieser Ventildüse eingesetzt wird.

Der erfindungsgemäße Auftragskopf hat grundsätzlich den Vorteil, daß der piezoelektrische Ventilantrieb bei vorhandener automatischer Temperaturkompensation nunmehr geeignet ist, eine einzige Ventildüse innerhalb eines kurzen Öffnungs- und Schließzyklusses von nur 0,8 bis 0,25 ms zu betätigen. Darüberhinaus ist der erfindungsgemäße Ventilantrieb sehr einfach aus wenigen Teilen aufgebaut, wodurch er einerseits kostengünstig herzustellen ist und andererseits insgesamt eine geringe Baugröße aufweist, wodurch die Aneinanderreihung von zahlreichen Auftragsköpfen nebeneinander auf engstem Raum möglich wird.

Bei einer Ausführungsform der Erfindung ist der Auftragskopf durch einen quer zu einer senkrecht durch ein Gelenk verlaufenden Achse angeordneten Wippenarm, dessen freier Endbereich mit dem Ventilglied verbunden ist, gekennzeichnet.

Bei dieser vorteilhaften Konstruktion, wird die geringfügige Längenvergrößerung jedes einzelnen Piezo-Stapels in einen relativ großen Ventilhub umgewandelt, wobei darüberhinaus auch eine große Ventilkraft von ca. 3000 N zur Verfügung gestellt wird. Darüberhinaus ist bei dieser Konstruktion des Auftragskopfes die thermische Trennung zwischen den Piezo-Stapeln und dem Heißbereich des Auftragskopfes besser möglich, da der Abstand zwischen den Piezoelementen und dem Bereich, an den das Ventilglied die thermische Trennschicht durchgreift, deutlich großer ist.

Bei einer Ausführungsform der Erfindung ist die Wippe über das als biegsame, schmale Werkstoffbrücke ausgebildete Gelenk stoffschlüssig mit einem ortsfest angeordneten Basisteil verbunden und die Wippe und das Basisteil sind beidseitig des Gelenks durch einen durchgehenden Spalt voneinander beabstandet.

Dieser erfindungsgemäße Aufbau des Ventilantriebs hat den Vorteil, daß die Wippe, wie auch das Basisteil aus einem Werkstück mittels des bekannten Funkenerosionsverfahren hergestellt werden können. Dadurch wird ein sehr kleines, kompaktes Antriebsbauteil geschaffen. Dabei ist die Breite des Spaltes zwischen Wippe und Basisteil nur so groß, daß die Wippe während des Betriebs des Auftragskopfes frei beweglich ist.

Eine darauf aufbauende weitere Ausführungsform der Erfindung ist dadurch gekennzeichnet, daß jeder Piezo-Stapel mit einem Verbindungsteil verklebt ist, welches mittels einer biegsamen, schmalen Werkstoffbrücke mit der Wippe verbunden ist.

Zur Verhinderung von für die Piezo-Stapel besonders schädlichen Querspannungen während der Bewegung der Wippe, werden diese mit einem Verbindungsteil verklebt, welches ebenfalls biegegelenkig mit der Wippe verbunden ist. Auch diese Gelenkverbindung ist durch das oben genannte Funkenerosionsverfahren auf einfache Weise und kostengünstig herzustellen. Dies bedeutet eine herstellungstechnische Vereinfachung, da das Basisteil, die Wippe und die Verbindungsteile aus einem Werkstück hergestellt werden können. Diese Wippenkonstruktion hat auch den Vorteil, daß sie eine sehr hohe Lebensdauer von über 250 Millionen Zyklen aufweist.

Bei einer bevorzugten Ausführungsform der Erfindung setzt sich das Gehäuse aus zwei Gehäuseteilen zusammen, zwischen denen eine thermische Trennschicht angeordnet ist, welche nur von dem stangenförmigen Ventilglied durchbrochen ist. Das erste Gehäuseteil beinhaltet den aus dem piezoelektrischen Element und der Wippe bestehenden Ventilantrieb und das zweite Gehäuseteil weist einen temperierten Kanal für das Medium sowie die durch einen Ventilkörper zu verschließende Ventilöffnung auf.

Diese erfindungsgemäße Ausführungsform eines Auftragskopfes kann vorteilhafterweise auch zur dosierten Abgabe von heißen Medien, insbesondere Heißkleber eingesetzt werden. Durch den zweiteiligen Aufbau des Gehäuses und die zwischengeordnete thermische Trennschicht wird bereits eine ganz erhebliche thermische Abkoppelung der beiden Teile erreicht. Darüber hinaus ermöglicht die erfindungsgemäße Konstruktion des Ventilantriebs auch die räumliche Trennung der für den Durchtritt des Ventilglieds notwendigen Öffnung und den aus Piezo-Stapeln bestehenden Antrieb. Dadurch wird die notwendigerweise vorhandene Schwächezone in bezug auf die thermische Trennung der beiden Gehäuseteile erheblich von den Piezo-Stapeln beabstandet. Das heißt, der nicht vollständig zu verhindernde Wärmeverlust im Bereich des die beiden Gehäuseteile verbindenden Ventilglieds führt zwar lokal zu einer Erwärmung, die jedoch nicht so groß ist, daß eine Gefährdung für die Piezo-Stapel besteht.

Bei einer auf der zuletzt beschriebenen Ausführungsform aufbauenden weiteren Ausführungsform weist das Ventilglied einen quer zur Längserstreckung der Wippe verlaufenden Biegekardan auf. Dieser im Bereich des ersten Gehäuseteiles im Ventilglied angeordnete Biegekardan hat zunächst einmal die Funktion, die kreisförmige Schwenkbewegung der Wippe auszugleichen. Darüber hinaus weist jedoch der Biegekardan auch den wesentlichen Vorteil auf, daß er einen hohen Wärmewiderstand besitzt und somit über die Ventilstange nur im geringen Umfang Wärme übertragen werden kann.

Da eine gewisse Erwärmung und damit Ausdehnung des piezoelektrischen Antriebsteils nicht verhinderbar ist, weist eine weitere vorteilhafte Ausführungsform an den von der Wippe wegweisenden Endbereichen der Piezo-Stapel eine nachgiebige Deckplatte auf. Durch diese nachgiebige Deckplatte wird für die sich aufgrund einer Temperaturerhöhung ergebende thermische Längenänderung der piezoelektrischen Elemente auf einfache Weise Raum geschaffen. Die beiden piezoelektrischen Elemente erwärmen sich gleichmäßig, wobei durch die Anordnung der Piezo-Stapel jeweils im gleichen Abstand von der durch das Gehäuse senkrecht verlaufenden Achse an der Wippe eine automatische Temperaturkompensation gegeben ist.

Bei einer besonders bevorzugten Ausführungsform der Erfindung ist zwischen der Spannungsquelle und den piezoelektrischen Elementen eine den Energieverbrauch verringernde Ladungspumpenanordnung vorhanden, welche im wesentlichen einen vollständigen Ladungsaustausch ermöglicht.

Der verringerte Energieverbrauch des piezoelektrischen Elements führt auf besonders vorteilhafte Weise auch zu geringeren Wärmeverlusten in der Elektronik, wodurch die Piezo-Stapel in geringerem Umfang erwärmt werden. Darüber hinaus ist natürlich auch der Betrieb des Auftragskopfes insgesamt kostengünstiger.

Auf vorteilhafte Weise kann die Ladungspumpenanordnung einen aus einer Spule und einem Kondensator bestehenden Zwischenspeicher, eine Vielzahl von auf den Zwischenspeicher und die Piezo-Stapel einwirkenden Transistoren und eine die Umladevorgänge bestimmende programmierbare Steuerung aufweisen. Durch diese elektronische Anordnung ist es möglich, die elektrische Ladung im wesentlichen vollständig von einem Piezo-Stapel auf den anderen Piezo-Stapel zu transformieren, so daß während des Betriebs des Auftragskopfes nur so viel Energie zugeführt werden muß, daß die Wärmeverluste und die aufgrund der Umwandlung von elektrischer Energie in mechanische Energie entstehenden Verluste gedeckt werden.

Letztlich weist eine besonders bevorzugte Ausführungsform einen Ventilantrieb mit einer Wegmeß-Vorrichtung auf, welche aus einer ortsfest angeordneten Leiterplatine und zwei beabstandet darauf befestigten stromdurchflossenen Spulen besteht, zwischen die ein zungenhafter Fortsatz der Wippe ragt.

Mit Hilfe dieses Wegmeßsystems ist es möglich, das Ventil so zu regeln, daß eine ganz bestimmte Ventilkurve erreicht wird. Durch die Bewegung des zungenartigen Fortsatzes parallel zur Wippenbewegung ändert sich nämlich die Induktivität der stromdurchflossenen Spulen. Falls sich der zungenartige Fortsatz nach unten bewegt, wird die Induktivität der unteren Spule größer und die Induktivität der oberen Spule kleiner. Diese Induktivitätsänderungen werden gemessen und sind ein direkter Maßstab für die Stellung des Ventils.

Weitere Vorteile der Erfindung ergeben sich aus den nachfolgenden Unteransprüchen sowie der Beschreibung eines Ausführungsbeispiels. Es zeigen:
Fig. 1 einen Längsschnitt durch einen Auftragskopf,
Fig. 2 eine Seitenansicht des Auftragskopfes gemäß des in Fig. 1 mit II bezeichneten Ansichtspfeils,
Fig. 3 eine Seitenansicht des Auftragskopfes gemäß des in Fig. 2 mit III bezeichneten Ansichtspfeils und
Fig. 4 ein vereinfachtes Blockschaltbild der Ventilelektronik.

In den Zeichnungen ist der Auftragskopf zur dosierten Abgabe von Heißkleber insgesamt mit der Bezugsziffer 10 bezeichnet.

Der Auftragskopf weist ein Gehäuse 11 auf, welches in Gehäuseteile 12 und 13 unterteilt ist. Zwischen den schraubverbundenen Gehäuseteilen 12 und 13 ist eine thermische Trennschicht 14 angeordnet. Eine Vielzahl von Auftragsköpfen 10 werden mit Hilfe einer Befestigungsvorrichtung 40 in einer nicht dargestellten Kleberauftragsmaschine nebeneinander angeordnet.

Im Gehäuseteil 12 ist im wesentlichen ein Ventilantrieb 15, eine Kammer 16 für nicht dargestellte elektronische Bauteile und eine elektrische Versorgungs- und Steuerleitung 18 vorhanden. Das Gehäuseteil 13 beinhaltet ein stangenförmiges Ventilglied 19, welches in einen Ventilkopf 20 hineinragt, eine Heizvorrichtung 21 und einen Heißkleberkanal 22 auf.

Der Ventilantrieb 15 erfolgt über ein aus zwei Piezo-Stapeln 23 bestehendes piezoelektrisches Element 24, welches einseitig an einer nachgiebigen, mit Schrauben S befestigten Deckplatte 17 anliegt. Die Piezo-Stapel 23 sind jeweils aus ca. 200 0,1 mm dicken keramischen Scheiben aufgebaut, die miteinander verklebt werden.

Des weiteren weist der Ventilantrieb 15 eine Wippe 25 auf, welche über ein Gelenk 26 mit einem Basisteil 27 verbunden ist. Während das Ventilglied 19 mittels einer Schraubverbindung 29 an einem freien Endbereich 28 der Wippe 25 befestigt ist, sind am gelenkseitigen Endbereich 30 der Wippe 25 die beiden Piezo-Stapel 23 in nachfolgend beschriebener Weise gelenkig angeordnet.

Nicht nur die Wippe 25, das Gelenk 26 und das Basisteil 27, sondern auch zwei der gelenkigen Befestigung der Piezo-Stapel 23a und 23b an der Wippe 25 dienende Verbindungsteile 31 sind miteinander stoffschlüssig verbunden. Sie sind gemeinsam aus einem einzigen Bauteil durch Zuhilfenahme des Funkenerosionsverfahrens hergestellt worden. So besteht das die Wippe 25 mit dem Basisteil 27 verbindende Gelenk 26 aus einer biegsamen, schmalen Werkstoffbrücke, welche beidseitig durch einen der Relativbewegung der Wippe 25 gegenüber dem Basisteil 27 dienenden Spalt 32 begrenzt ist. Auf die gleiche Weise sind auch die Verbindungsteile 31, welche mit den Piezo-Stapeln 23 verklebt sind, jeweils über ein Gelenk 33 stoffschlüssig mit der Wippe 25 verbunden.

Die Piezo-Stapel 23a und 23b sind beidseitig einer senkrechten, durch das Gelenk verlaufenden Achse G jeweils in einem Abstand d über das Gelenk 33 mittelbar mit der Wippe 25 verbunden. Dadurch ergibt sich in Verbindung mit der nachgiebigen Lagerung der Piezo-Stapel 23a und 23b durch die Deckplatte 17 eine automatische Temperaturkompensation.

Da die Piezo-Stapel 23a und 23b mit einer Spannungsquelle verbunden sind, ist eine nicht dargestellte, jeweils an das Verbindungsteil 31 angrenzende untere Scheibe der Piezo-Stapel 23a und 23b als Isolierschicht ausgebildet, welche die elektrische Trennung von Wippe 25 und Piezo-Stapel 23a und 23b sicherstellt.

Das mit dem freien Endbereich 28 der Wippe 25 verbundene, stangenförmige Ventilglied 19 durchgreift im Bereich einer Öffnung 34 die thermische Trennschicht 14 zwischen den Gehäuseteilen 12 und 13. Unterhalb der Öffnung 34 ist eine Messinghülse 35 angeordnet, die der Aufnahme eines Dichtsystems dient. Die Messinghülse 35 weist eine Leckbohrung 36 auf, die quer zur Längsachse des Ventilglieds 19 verläuft. Falls eine im unteren Bereich der Messinghülse 35 angeordnete teflongefüllte Ringdichtung 37 undicht werden sollte, tritt aus der Leckbohrung 36 erkennbar Heißkleber aus. Die Leckbohrung 36 ist jedoch zugleich auch als Montagebohrung für die im Gehäuseteil 13, angrenzend an die Messinghülse 35 angeordnete Heizpatrone 21 vorgesehen.

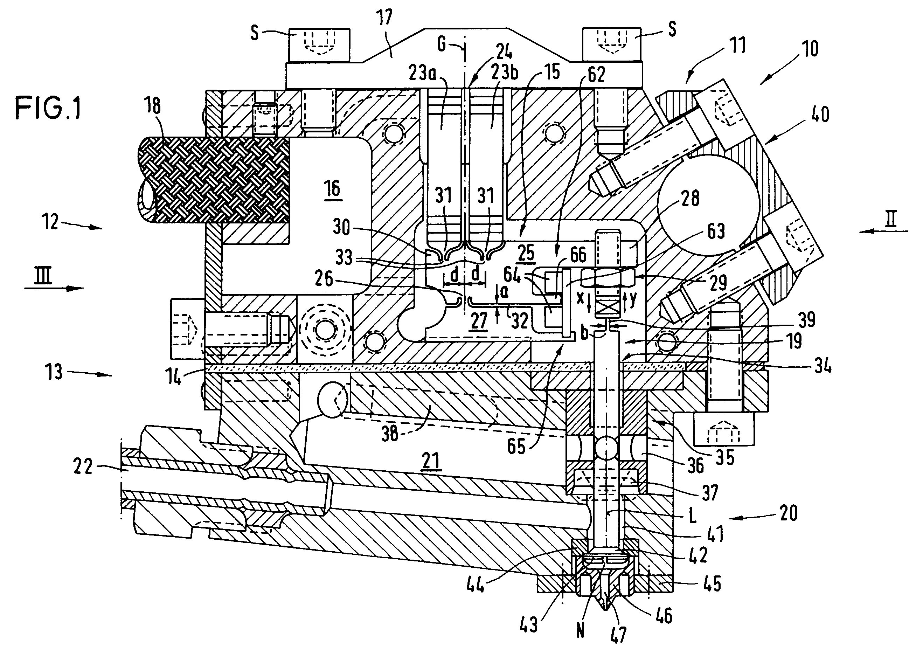

Oberhalb der Heizpatrone 21 ist gestrichelt in der Fig. 1 ein Temperatursensor 38 dargestellt. Unterhalb der Heizpatrone 21 wird im Heißkleberkanal 22 unter hohem Druck der Heißkleber von einer nicht dargestellten Schmelzvorrichtung und einer beheizten Schlauchleitung hin zum Ventilkopf 20 transportiert. Der Heißkleberkanal 22 mündet in einen das Ventilglied 19 umgebenden Ringraum 41. Am freien Ende weist das Ventilglied 19 einen Ventilkörper 42, der mit einer der Drehverstellung des Ventilglieds dienenden Betätigungsnut N versehen ist. Mittels des Ventilkörpers 42 ist eine im Ventilkopf 20 vorhandene Ventilöffung verschließbar.

In der in Fig. 1 dargestellten Situation liegen Dichtflächen 43 des Ventilkörpers 42 an einem aus gehärtetem Stahl bestehenden Ventilsitz 44 an. In der Nähe des Ventilkörpers 42 ist mittels einer Düsenplatte 45 ein Düsenbauteil 46 am Ventilkopf 20 schraubbefestigt. Der Düsenkörper 46 weist mittig einen feinen Düsenkanal 47 auf, durch welcher der Heißkleber dosiert auf ein nicht dargestelltes Substrat abgegeben werden kann.

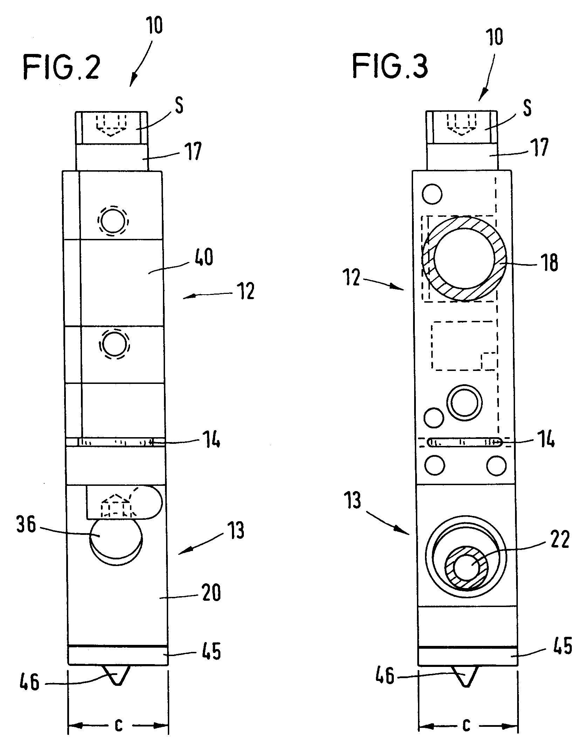

In den Fig. 2 und 3 sind Seitenansichten des Auftragskopfes 10 dargestellt. Fig. 2 zeigt die Seitenansicht gemäß einem in Fig. 1 mit II bezeichneten Ansichtspfeil. Zunächst wird deutlich, daß der Auftragskopf 10 nur eine geringe Breite c aufweist, die beim Ausführungsbeispiel nur 12 mm beträgt. Dadurch wird es möglich, eine Vielzahl von Auftragsköpfen 10 nebeneinander in einer Kleberauftragsmaschine mit Hilfe der Befestigungsvorrichtung 40 anzuordnen.

Zwischen den Gehäuseteilen 12 und 13 ist die thermische Trennschicht 14 zu erkennen. Während oberhalb des Gehäuseteils 12 die mittels Schrauben S befestigte Deckplatte 17 dargestellt ist, zeigt die Seitenansicht des Gehäuseteils 13 einerseits die Leckbohrung 36 sowie die der Befestigung des Düsenbauteils 46 dienende Düsenplatte 45, die ihrerseits mittels nicht dargestellter Schrauben mit dem Ventilkopf 20 verbunden ist.

In der Fig. 3 ist darüber hinaus die Seitenansicht gemäß einem in Fig. 1 mit III bezeichneten Ansichtspfeil zu sehen. In dieser Seitenansicht sind zusätzlich noch die Steuer- und Versorgungsleitung 18 sowie der Heißkleberkanal 22 zu erkennen.

Eine Bewegung des in der Ruhelage an den Dichtflächen 43 umlaufend anliegenden Ventilkörpers 42 wird von den Piezo-Stapeln 23a und 23b dadurch bewirkt, daß letztere abwechselnd von einem elektrischen Potential beaufschlagt werden und sich ausdehnen.

Falls sich beispielsweise der Piezo-Stapel 23b unter Spannungsbeaufschlagung ausdehnt, wird die Wippe 25 mit einem in Richtung des Uhrzeigersinnes wirkenden Drehmoment beaufschlagt, durch welches sich die Wippe 25 und das damit verbundene Ventilglied 19 in x-Richtung bewegen. Durch den etwa 0,15 bis 0,17 mm betragenden Hub des Ventilglieds 19 wird der Ventilkörper 42 in Richtung zum Düsenkanal 47 bewegt, so daß der Heißkleber unter hohem Druck die sich ergebende Ventilöffnung passiert.

Zum Ausgleich der kreisförmigen Bewegung des freien Endbereichs 28 der Wippe 25 weist die Ventilstange 29 einen quer zur Längserstreckung der Wippe 25 angeordneten Biegekardan 39 auf, der nur eine Dicke b von 0,1 bis 0,4 mm aufweist. Darüber hinaus wird durch den geringen Querschnitt des Biegekardans 39 die Wärmeleitung vom Gehäuseteil 13 hin zum Gehäuseteil 12 verringert.

Falls nun die Spannungsversorgung für den Piezo-Stapel 23b unterbrochen wird und die Spannung dann an dem Piezo-Stapel 23a angelegt wird, ergibt sich dementsprechend ein gegen den Uhrzeigersinn um das Gelenk 26 wirkendes Drehmoment. Dadurch wird die Wippe 25 und das Ventilglied 19 in y-Richtung nach oben bewegt. In diesem Falle bewegt sich auch der Ventilkörper 42 entgegen der Strömungsrichtung des Heißklebers - aus diesem Grunde spricht man vom sogenannten Negativ-Verschluß - in Richtung zum Ventilsitz 44, wodurch nach und nach der zur Verfügung stehende Strömungsquerschnitt verringert wird. Durch diese gegen die Strömung und den hohen Druck des Heißklebers gerichtete Bewegung des Ventilkörpers 42 wird der letztlich unterhalb des Ventilkörpers 42 und im Heißkleberkanal 47 befindliche Heißkleber zurückgesaugt, wodurch der auf dem nichtdargestellten Substrat angeordnete Kleberpunkt eine gute Abrißkante aufweist.

Für einen Öffnungs- und Schließvorgang des Ventils benötigt man nur eine Zeit von 0,8 bis 0,25 ms. Diese geringe Zykluszeit wird durch die hohe Reaktionsfähigkeit der Piezo-Stapel 23 erreicht.

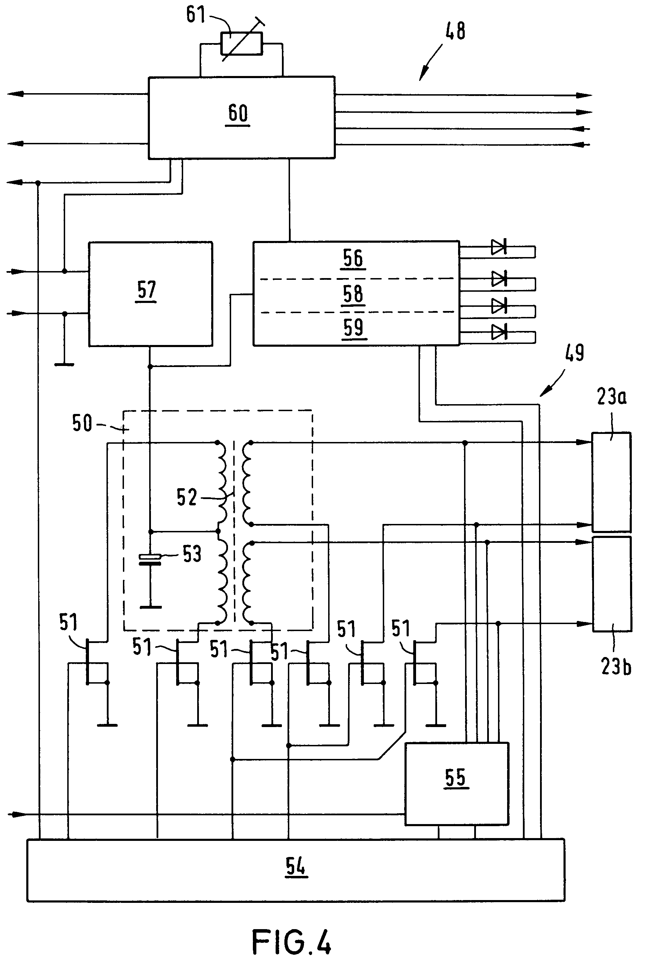

Die Steuerung und Regelung des aus zwei Piezo-Stapeln 23a und 23b bestehenden piezoelektrischen Elements 24 erfolgt durch eine besondere Ventilelektronik 48, die im wesentlichen in der in Fig. 1 dargestellten Kammer 16 angeordnet ist. Die im einem Blockschaltbild in der Fig. 4 dargestellte Ventilelektronik 48 ermöglicht einerseits die abwechselnde Spannungsbeaufschlagung der beiden Piezo-Stapel 23a und 23b und andererseits eine besonders energiesparende und damit auch mit geringen Wärmeverlusten behafteten Betrieb des Auftragskopfes 10.

Insbesondere zum Zwecke des verringerten Energieverbrauchs weist die Ventilelektronik 48 eine sogenannte Ladungspumpenanordnung 49 auf, welche grundsätzlich in der Fig. 4 dargestellt ist. Die Ladungspumpenanordnung 49 weist im wesentlichen einen Zwischenspeicher 50 und mehrere Leistungsfeldeffekttransistoren 51 auf, wobei der Zwischenspeicher 50 wie auch die Leistungsfeldeffekttransistoren 51 jeweils mit beiden Piezo-Stapeln 23a und 23b verbunden sind. Der Zwischenspeicher 50 beinhaltet eine Spule 52 und einen Kondensator 53. Die Energieeinsparung wird beim Betrieb des piezoelektrischen Elements 24 durch das bei der sogenannten Gegentaktanordnung der Piezo-Stapel 23a und 23b verwendbare Umladeprinzip erreicht.

Grundsätzlich bedeutet dieses Umladeprinzip, daß die jeweils in einem Piezo-Stapel 23a oder 23b gespeicherte Energie (Ladung) "portionsweise" in den jeweils anderen Piezo-Stapel 23a oder 23b transformiert wird. Grundsätzlich erfolgt dies innerhalb der Ladungspumpenanordnung 49 dadurch, daß einerseits die Ladung eines Piezo-Stapels 23a oder 23b zeitweise im Zwischenspeicher 50 gespeichert wird und daß andererseits die Leistungsfeldeffekttransistoren 51 schrittweise durch gezieltes Schalten unterschiedlicher Netzwerke die gespeicherte Energie jeweils auf den anderen Piezo-Stapel 23a oder 23b transformieren. Der zeitliche Ablauf der Umladevorgänge und der jeweilige Schaltzustand der Leistungsfeldeffekttransistoren 51 wird durch eine programmierbare Steuerung 54 bestimmt. Auf die programmierbare Steuerung 54 wirkt jedoch noch eine Regelschaltung 55 ein, welche ständig den Soll-Ist-Wertvergleich des Spannungszustandes der einzelnen Piezo-Stapel 23a und 23b abfragt.

Durch dieses Umladeprinzip ist es möglich, daß die in einem Piezo-Stapel 23a oder 23b vorhandene Energie in den Primärkreis zurückgespeist, und dann wieder zur Erregung des jeweils anderen Piezo-Stapels 23a oder 23b verwendet werden kann.

Da bei diesen elektronischen Vorgängen jedoch ein kleiner Teil der Energie in Wärme umgesetzt und darüber hinaus ein größerer Teil der elektrischen Energie in mechanische Energie umgewandelt wird, besteht jedoch ständig die Notwendigkeit, daß dieses Energiedefizit ausgeglichen werden muß. Dies geschieht durch die mit dem Schaltregler 57 und dem internen Spannungsversorgung 56 bereitgestellten Energie.

Darüber hinaus weist die Ventilelektronik 48 einen Taktgenerator 58 und eine Zustandsanzeige 59 auf, die jedoch außerhalb des Auftragskopfes 10 angeordnet sind. Während der Taktgenerator 58 - wie der Name sagt - den Takt für die ablaufenden elektronischen Vorgänge vorgibt, handelt es sich bei der Zustandsanzeige 59 um eine optische Anzeige für den Bediener.

Die Ventilelektronik 48 weist auch noch einen Temperaturregler 60 auf, der die Ventiltemperatur auf die an einem Sollwert-Potentiometer 61 vorgegebene Temperatur regelt. Dies bedeutet, daß der oberhalb der Heizpatrone 21 angeordnete Temperatursensor 38 ständig die Ventiltemperatur mißt. Nur wenn diese Temperatur mit der am Sollwert-Potentiometer 61 vorliegenden Temperatur übereinstimmt und somit die Arbeitstemperatur vorliegt, wird das Ventil von der programmierbaren Steuerung 54 freigegeben.

Letztlich ist im Auftragskopf 10 im Bereich zwischen dem Basisteil 27 und der Wippe 25 noch ein WegMeßvorrichtung 62 angeordnet. Die Weg-Meßvorrichtung 62 besteht aus einer Leiterplatine 63 und zwei darauf befindlichen Spulen 64. Die Leiterplatine 63 ist in einer entsprechenden Aussparung 65 des Basisteils 27 befestigt. Zwischen die beiden auf der Leiterplatine 63 befestigten Spulen 64 ragt ein stoffschlüssig an der Wippe 25 angeordneter zungenartiger Fortsatz 66. Falls sich nun die Wippe 25 - angetrieben durch die Piezo-Stapel 23a oder 23b - bewegt, verändert sich die Stellung des zungenartigen Fortsatzes 66 zu den beiden oberhalb bzw. unterhalb des Fortsatzes 66 angeordneten Spulen 64. Durch diese Lageveränderung des Fortsatzes 66 verändert sich auch die Induktivität der stromdurchflossenen Spulen 64, wobei die Induktivitätsveränderung ein direkter Maßstab für die Stellung des Ventilkörpers 42 innerhalb des Ventilkopfes 20 ist. Mit Hilfe dieses Meßverfahrens ist es möglich, in den Betriebsablauf des Auftragskopfes 10 so einzugreifen, daß eine ganz bestimmte Ventilkurve erreicht wird.

## Patentansprüche

1. Auftragskopf (10) zur dosierten Abgabe von strömenden Medien, insbesondere Schmelzkleber, Schmierstoffe, Farben od. dgl., mit einem Gehäuse (11), in dem ein Ventilantrieb und wenigstens eine Ventildüse (46) angeordnet ist, mit einem aus mindestens zwei mit einer Spannungsquelle verbundenen, nebeneinander angeordneten Piezo-Stapeln (23a, 23b) bestehenden piezoelektrischen Element (24), wobei die Piezo-Stapel (23a, 23b) abwechselnd auf eine Wippe (25) einwirken, an der ein Ventilglied (19) angeordnet ist und daß am gelenkseitigen Endbereich (33) der Wippe (25) die Piezo-Stapeln (23a; 23b) jeweils in gleichen Abstand (d) beidseitig einer senkrecht durch das Gelenk (26) verlaufenden Achse (G) angeordnet sind und abwechselnd auf die Wippe (25) einwirken, dadurch gekennzeichnet, daß das piezo-elektrische Element (24) einschließlich schwenkbar gelagerter Wippe (25) einer einzigen Ventildüse (46) zugeordnet ist und zur Betätigung des Ventilgliedes (19) sowohl in Schließrichtung als auch in Öffnungsrichtung dieser Ventildüse (46) eingesetzt wird.

2. Auftragskopf nach Anspruch 1, gekennzeichnet durch einen quer zu einer senkrecht durch ein Gelenk (26) verlaufenden Achse (G) angeordneten Wippenarm, dessen freier Endbereich (28) mit dem Ventilglied (19) verbunden ist.

3. Auftragskopf nach Anspruch 1 oder 2, dadurch gekennzeichnet, daß die Wippe (25) über das als biegsame, schmale Werkstoffbrücke ausgebildete Gelenk (26) stoffschlüssig mit einem ortsfest angeordneten Basisteil (27) verbunden ist, und daß die Wippe (25) und das Basisteil (27) beidseitig des Gelenks (26) durch einen durchgehenden Spalt (32) voneinander beabstandet sind.

4. Auftragskopf nach einem der Ansprüche 1 bis 3, dadurch gekennzeichnet, daß jeder Piezo-Stapel (23a; 23b) mit einem Verbindungsteil (31) verklebt ist, welches stoffschlüssig mittels einer biegsamen, schmalen Werkstoffbrücke mit der Wippe (25) verbunden ist.

5. Auftragskopf nach einem der Ansprüche 1 bis 4, dadurch gekennzeichnet, daß sich das Gehäuse (11) aus zwei Gehäuseteilen (12; 13) zusammensetzt, zwischen denen eine thermische Trennschicht (14) angeordnet ist, welche nur von dem stangenförmigen Ventilglied (19) unterbrochen ist, daß das erste Gehäuseteil (12) den aus dem piezoelektrischen Element (24) und der Wippe (25) bestehenden Ventilantrieb (15) beinhaltet und daß das zweite Gehäuseteil (13) einen temperierten Kanal (22) für das Medium sowie die durch einen Ventilkörper (42) zu verschließende Ventilöffnung aufweist.

6. Auftragskopf nach einem der vorangehenden Ansprüche, dadurch gekennzeichnet, daß das Ventilglied (19) einen quer zur Längserstreckung der Wippe (25) verlaufenden Biegekardan (39) aufweist.

7. Auftragskopf nach einem der vorangehenden Ansprüche, dadurch gekennzeichnet, daß an den von der Wippe (25) wegweisenden Endbereichen der Piezo-Stapel (23a; 23b) eine nachgiebige Deckplatte (17) anliegt.

8. Auftragskopf nach einem der vorangehenden Ansprüche, dadurch gekennzeichnet, daß zwischen der Spannungsquelle und den Piezo-Stapeln (23a; 23b) eine den Energieverbrauch verringernde Ladungspumpenanordnung (49) vorhanden ist, welche in wesentlichen einen vollständigen Ladungsaustausch ermöglicht.

9. Auftragskopf nach einem der vorangehenden Ansprüche, dadurch gekennzeichnet, daß die Ladungspumpenanordnung (49) einen aus einer Spule (52) und einem Kondensator (53) bestehenden Zwischenspeicher (50) , einer Vielzahl von auf den Zwischenspeicher (50) und die Piezo-Stapel (23a; 23b) einwirkenden Transistoren (51) und eine die Umladevorgänge bestimmende programmierbare Steuerung (54) aufweist.

10. Auftragskopf nach einem der vorangehenden Ansprüche, dadurch gekennzeichnet, daß der Ventilantrieb (15) eine Weg-Meßvorrichtung (62) aufweist, welche aus einer ortsfest angeordneten Leiterplatine (63) , zwei beabstandet darauf befestigten, stromdurchflossenen Spulen (64) besteht, und daß ein zungenhafter Fortsatz (66) der Wippe (25) zwischen die Spulen (64) ragt.

11. Auftragskopf nach Anspruch 8, dadurch gekennzeichnet, das die Leiterplatine (63) in einer am Basisteil (27) vorgesehenen Aussparung 65) angeordnet ist.

12. Auftragskopf nach einem der vorangehenden Ansprüche, dadurch gekennzeichnet, daß sich ein am freien Ende des Ventilglieds (19) angeordneter Ventilkörper (42) in der Ruhelage der Wippe (25) in der Schließstellung befindet.

## Claims

1. Applicator head (10) for metering out flowing media, in particular hot-melt adhesives, lubricants, paints or the like, comprising a housing (11) in which a valve actuator and at least one valve nozzle (46) are arranged, with a piezoelectric element (24) consisting of at least two piezoelectric stacks (23a, 23b) arranged one alongside the other and connected to a voltage source, the piezoelectric stacks (23a, 23b) acting alternately on a rocker (25) on which a valve member (19) is arranged and the piezoelectric stacks (23a, 23b) each being arranged at the end region (33) of the rocker (25) on the joint side at the same distance (d) on either side of an axis (G) extending perpendicularly through the joint (26) side and acting alternately on the rocker (25), characterised in that the piezoelectric element (24), including the swivel-mounted rocker (25), is associated with one single valve nozzle (46) and is used to actuate the valve member (19) both in the closing direction and in the opening direction of this valve nozzle (46).

2. Applicator head according to claim 1, characterised by a rocker arm arranged transversely to an axis (G) extending perpendicularly through a joint (26), its free end region (28) being connected to the valve member (19).

3. Applicator head according to claim 1 or claim 2, characterised in that the rocker (25) is integrally connected to a fixedly arranged base part (27) by means of the joint (26) in the form of a flexible narrow material bridge and that the rocker (25) and the base part (27) are arranged at a distance from one another on either side of the joint (26) by means of a continuous gap (32).

4. Applicator head according to one of claims 1 to 3, characterised in that each piezoelectric stack (23a; 23b) is glued to a connecting part (31) integrally connected to the rocker (25) by means of a flexible narrow material bridge.

5. Applicator head according to one of claims 1 to 4, characterised in that the housing (11) is composed of two housing parts (12; 13) between which a thermal insulating layer (14) interrupted only by the rod-shaped valve member (19) is arranged, that the first housing part (12) contains the valve actuator (15) consisting of the piezoelectric element (24) and the rocker (25) and that the second housing part (13) has a temperature-controlled channel (22) for the medium, as well as the valve opening to be closed by means of a valve body (42).

6. Applicator head according to one of the preceding claims, characterised in that the valve body (19) has a flexible cardan shaft (39) extending transversely to the longitudinal extent of the rocker (25).

7. Applicator head according to one of the preceding claims, characterised in that a resilient cover plate (17) bears against the end regions of the piezoelectric stacks (23a; 23b) directed away from the rocker (25).

8. Applicator head according to one of the preceding claims, characterised in that a charge pump arrangement (49) reducing energy consumption and essentially allowing for complete charge exchange is provided between the voltage source and the piezoelectric stacks (23a; 23b).

9. Applicator head according to one of the preceding claims, characterised in that the charge pump arrangement (49) has an intermediate store (50) consisting of a coil (52) and a capacitor (53), a plurality of transistors (51) acting on the intermediate store (50) and the piezoelectric stacks (23a; 23b) and a programmable control unit (54) determining the recharging operations.

10. Applicator head according to one of the preceding claims, characterised in that the valve actuator (15) has a position transducer (62) consisting of a fixedly arranged printed circuit board (63) and two current-carrying coils (64) secured thereto at a distance from one another, and that a tongue-like projection (66) of the rocker (25) projects between the coils (64).

11. Applicator head according to claim 8, characterised in that the printed circuit board (63) is arranged in a recess (65) provided on the base part (27).

12. Applicator head according to one of the preceding claims, characterised in that a valve body (42) arranged at the free end of the valve member (19) is situated in the closed position in the rest position of the rocker (25).

## Revendications

1. Tête de dépôt (10) pour la distribution dosée de milieux fluides, en particulier de colle en fusion, de lubrifiants, de colorants ou analogues, équipée d'une enveloppe (11) dans laquelle une commande de soupape et au moins une buse (46) de soupape sont disposées, d'un élément piézo-électrique (24) consistant en au moins deux empilements piézo-électriques juxtaposés (23a, 23b) et reliés à une source de tension, les empilements piézo-électriques (23a, 23b) agissant en alternance sur une bascule (25) contre laquelle un organe de soupape (19) est disposé et chacun des empilements piézo-électriques (23a ; 23b) étant disposé dans la zone d'extrémité (33), côté articulation, de la bascule (25), à même distance (d) de part et d'autre d'un axe (G) passant verticalement par l'articulation (26), et agissant en alternance sur la bascule (25), caractérisée en ce que l'élément piézo-électrique (24), y compris la bascule montée oscillante (25), est associé à une unique buse de soupape (46) et est utilisé pour l'actionnement de l'organe de soupape (19) aussi bien dans le sens de la fermeture que dans le sens de l'ouverture de cette buse (46) de soupape.

2. Tête de dépôt selon la revendication 1, caractérisée par un bras de bascule, qui est disposé perpendiculairement à un axe (G) passant verticalement par une articulation (26) et dont la partie d'extrémité libre (28) est reliée à l'organe de soupape (19).

3. Tête de dépôt selon la revendication 1 ou 2, caractérisée en ce que la bascule (25) est reliée par l'articulation (26) configurée en un lien souple et étroit de matière, à un organe de base (27) disposé en position fixe et en ce que la bascule (25) et l'organe de base (27) sont placés à distance l'une de l'autre sur les deux côtés de l'articulation (26) en étant séparés par une fente continue (32).

4. Tête de dépôt selon l'une des revendications 1 à 3, caractérisée en ce que chaque empilement piézo-électrique (23a ; 23b) est collé à un organe d'assemblage (31) qui est relié par amalgame de matière à la bascule (25) au moyen d'un lien souple et étroit de matière.

5. Tête de dépôt selon l'une des revendications 1 à 4, caractérisée en ce que l'enveloppe (11) se compose de deux parties d'enveloppe (12 ; 13) entre lesquelles une couche de séparation thermique (14) est disposée et n'est interrompue que par l'organe de soupape en forme de tige (19), en ce que la première partie d'enveloppe (12) renferme la commande de soupape (15) se composant de l'élément piézo-électrique (24) et de la bascule (25) et en ce que la deuxième partie d'enveloppe (13) comprend un canal tempéré (22) destiné au milieu ainsi que le trou de soupape qui s'obture au moyen d'un corps de soupape (42).

6. Tête de dépôt selon l'une des revendications précédentes, caractérisée en ce que l'organe de soupape (19) comporte un joint à la Cardan par flexion, qui est perpendiculaire à la direction de la longueur de la bascule (25).

7. Tête de dépôt selon l'une des revendications précédentes, caractérisée en ce qu'une plaque flexible de couverture (17) est en appui contre la partie d'extrémité des empilements piézo-électriques (23a ; 23b) qui est située à l'opposé de la bascule (25).

8. Tête de dépôt selon l'une des revendications précédentes, caractérisée en ce qu'une disposition de pompage de charges (49) réduisant la consommation d'énergie et se trouvant entre la source de tension et les empilements piézo-électriques (23a ; 23b) permet essentiellement un échange total des charges.

9. Tête de dépôt selon l'une des revendications précédentes, caractérisée en ce que la disposition de pompage de charges (49) comprend un accumulateur intermédiaire (50) se composant d'une bobine (52) et d'un condensateur (53), de multiples transistors (51) agissant sur l'accumulateur intermédiaire (50) et les empilements piézo-électriques (23a ; 23b), ainsi qu'une commande programmable (54) déterminant les processus de transfert de charge.

10. Tête de dépôt selon l'une des revendications précédentes, caractérisée en ce que la commande de soupape (15) comprend un dispositif de mesure de course (62) qui se compose d'une platine à conducteur (63) disposée en position fixe et de deux bobines (64) dans lesquelles circule le courant et qui sont fixées à cette platine à distance l'une de l'autre et en ce qu'un prolongement (66) de la bascule (25) qui est en forme de languette pénètre entre les bobines (64).

11. Tête de dépôt selon la revendication 8, caractérisée en ce que la platine à conducteur (63) est disposée dans un évidement (65) prévu dans l'organe de base (27).

12. Tête de dépôt selon l'une des revendications précédentes, caractérisée en ce qu'un corps de soupape (42) disposé à l'extrémité libre de l'organe de soupape (19) se trouve en position de fermeture lorsque la bascule (25) est en position de repos.
